Europäisches Patentamt

European Patent Office

Office européen des brevets

(19)

(11) Numéro de publication: **0 267 840 B1**

(12) **FASCICULE DE BREVET EUROPEEN**

(45) Date de publication de fascicule du brevet:
**18.09.91**

(51) Int. Cl.⁵: **G01S 15/87**, G01S 5/18,
G01V 1/38

(21) Numéro de dépôt: **87402404.5**

(22) Date de dépôt: **26.10.87**

Le dossier contient des informations techniques
présentées postérieurement au dépôt de la
demande et ne figurant pas dans le présent
fascicule.

(54) **Procédé et dispositif pour déterminer la position d'objets immerges par rapport au navire qui les rémorque.**

(30) Priorité: **31.10.86 FR 8615309**

(43) Date de publication de la demande:
**18.05.88 Bulletin 88/20**

(45) Mention de la délivrance du brevet:
**18.09.91 Bulletin 91/38**

(84) Etats contractants désignés:
**BE DE GB IT NL**

(56) Documents cités:
**WO-A-84/03153          FR-A- 2 203 352**
**FR-A- 2 533 706          GB-A- 2 089 042**
**GB-A- 2 113 391          US-A- 4 063 213**

(73) Titulaire: **INSTITUT FRANCAIS DU PETROLE**
**4, Avenue de Bois-Préau**
**F-92502 Rueil-Malmaison(FR)**

(72) Inventeur: **Brac, Jean**
**5, rue Réaumur**
**F-17600 Saujon(FR)**

## Description

L'invention a pour objet un procédé et un dispositif de détermination de la position d'cbjets immergés relativement à un navire qui les remorque.

Plus particulièrement, l'invention concerne un procédé et un dispositif de détermination de la position d'éléments d'un dispositif d'émission et de réception sismique remorqués en immersion par un navire, par rapport à plusieurs emplacements dont la position par rapport au navire est déterminée.

On connait un procédé de télémétrie acoustique pour déterminer la position d'un objet ou d'un véhicule remorqué en immersion par un navire qui consiste à immerger des transpondeurs à des emplacements bien déterminés de la zone d'évolution prévue et à mesurer par télémétrie acoustique, les distances entre le navire remorqueur, les transpondeurs et le véhicule. La position de l'objet ou du véhicule remorqué par rapport au navire est calculée par triangulation. Un tel procédé est décrit dans le brevet US-4.229.809.

La précision qu'il permet d'atteindre est bonne du fait que l'espacement entre les transpondeurs est du même ordre de grandeur que les distances à mesurer.

Son utilisation est cependant difficile en raison du balisage de la zone d'évolution qui doit être effectué préalablement par immersion de transpondeurs.

Ceci est un inconvénient notable surtout lorsque le balisage doit être fait spécialement pour une application particulière et la zone à baliser est très étendue, comme c'est le cas notamment en prospection sismique marine.

Un autre procédé connu permettant de déterminer la position dans l'eau d'un objet remorqué, en l'occurence celle de différents points d'une flûte sismique par rapport au navire remorqueur, est décrit dans le brevet US-4.376.301.

Suivant ce procédé, on détermine par télémétrie acoustique, la distance entre deux sources d'impulsions acoustiques fixées au navire et dont les positions sont connues avec précision et chaque hydrophone d'une pluralité d'hydrophones répartis le long de la flûte.

La demande de brevet français 2.545.226 décrit également un procédé pour déterminer la position dans l'eau d'une flûte sismique remorquée en immersion, consistant essentiellement à mesurer les distances au navire d'une pluralité de points répartis le long de la flûte et l'azimut de ces points, au moyen d'un gyro-compas et d'un système hydro-acoustique à base très courte.

Pour des raisons essentiellement pratiques, l'écartement entre les points de référence où les transducteurs acoustiques du système de télémétrie acoustique sont fixés par rapport au navire, est souvent très faible relativement à la longueur des objets remorqués, qu'il s'agisse d'un dispositif d'émission multi-sources ou d'une flûte sismique.

La distance entre les points de référence est comprise entre quelques dizaines de centimètres et quelques mètres alors que la flûte s'étend parfois sur plusieurs kilomètres. Le triangle constitué par les points de référence de la base et chaque point de la flûte sismique est disproportionné, ce qui nuit beaucoup à la précision des mesures télémétriques ou des mesures angulaires effectuées depuis le navire.

Par la demande de brevet français 2.533.706, on connait un procédé de localisation d'un objet remorqué en immersion par rapport à un navire remorqueur. Parallèlement à celui-ci et en retrait, se déplace un navire auxiliaire autonome. La position des deux navires l'un par rapport à l'autre est mesurée par un système de radio-navigation classique et par triangulation au moyen de transpondeurs acoustiques immergés.

La position de l'objet remorqué (en l'occurrence une flûte sismique) est déterminée par triangulation au moyen d'un système de télémétrie acoustique comportant un émetteur-récepteur sous le navire principal, un récepteur acoustique sous le navire auxiliaire, et de transpondeurs acoustiques répartis le long de l'objet remorqué.

La mise en oeuvre de ce procédé nécessite donc l'emploi de deux véhicules autonomes munis chacun d'un système de positionnement par radio-navigation, et d'un ensemble d'émission par radio pour transmettre au navire principal les signaux indicatifs des instants d'arrivée des réponses acoustiques parvenues au navire secondaire. En outre, les émetteurs et récepteurs acoustiques associés aux navires sont immergés à une profondeur relativement faible et l'on verra que cela peut rendre plus difficile la détection des signaux acoustiques en raison de l'agitation de l'eau dans ses couches superficielles notamment dans le sillage.

Par la demande de brevet WO 84/03153, on connait un système de repérage pour déterminer la position dans l'eau d'une flûte sismique par rapport à un navire qui le remorque. Ce système comporte notamment des transpondeurs acoustiques fixés à des paravanes remorquées qui sont déportées latéralement par rapport à la route du navire. La position de la flûte sismique est déterminée dans ce cas par télémétrie acoustique par rapport à ces transpondeurs. Un tel système de repérage avec des transpondeurs bien écartés l'un de l'autre peut fournir des mesures précises à condition toutefois de connaître précisément leur position par rapport au navire.

Le procédé selon l'invention permet de déterminer la position d'objets immergés associés à des moyens de réception d'ondes acoustiques et remorqués en immersion par un navire relativement à un ensemble de repérage relié au navire qui comporte l'utilisation d'une base de repérage mobile comprenant deux ensembles d'émission-réception d'ondes acoustiques remorqués en immersion et déportés latéralement de part et d'autre de la trajectoire du navire, par la mesure du temps de propagation de ces ondes sur des trajets entre l'ensemble de repérage et lesdits objets, le procédé selon l'invention évitant les inconvénients des procédés antérieurs.

Il est caractérisé en ce que :

- le procédé comporte en outre l'utilisation d'une base de repérage fixée au navire et pourvue d'au moins deux ensembles d'émission-réception d'ondes acoustiques; et en ce que l'on réalise
- un premier cycle de télémesure acoustique de la position de la base de repérage mobile relativement à la base de repérage fixée au navire,
- au moins un second cycle de télémesure acoustique de la position des moyens de réception associés aux objets remorqués relativement à la base de repérage mobile, et en ce que :
- l'on détermine la position des objets remorqués relativement au navire.

Avec un seul navire et des moyens appropriés de remorquage et de déflexion transversale, on peut constituer une base de repérage longue et, par télémétrie acoustique, obtenir la position dans l'eau d'objets remorqués. La précision des mesures obtenues est particulièrement bonne du fait que :

- l'écart latéral qui sépare les ensembles d'émission-réception remorqués est important,
- l'emploi de moyens de déflexion immergeables à une profondeur relativement grande permet de s'affranchir des perturbations qui affectent la propagation des signaux acoustiques et dues aux mouvements de l'eau et aux remous dans le sillage du navire, et aussi, ce qui est essentiel,
- du fait que la position des deux ensembles d'émission-réception acoustique remorqués constituant la base de repérage mobile, est déterminée avec régularité par rapport à un base de repérage fixe par rapport au navire pour tenir compte des fluctuations pouvant intervenir dans les conditions de remorquage. Les moyens de mesure intègrent à chaque instant les résultats de deux étapes de mesure télémétrique, l'une concernant le positionnement des ensembles remorqués par rapport au navire, l'autre le positionnement des objets par rapport à ces mêmes ensembles, les deux étapes pouvant être effectuées alternativement.

D'autres avantages du procédé et les caractéristiques du dispositif pour sa mise en oeuvre apparaîtront à la lecture de la description de modes de réalisation donnés à titre d'exemples non limitatifs, en se référant aux dessins annexés où :

- la figure 1 représente un navire remorquant derrière lui un dispositif d'émission et une flûte sismique et pourvu d'ensembles d'émission-réception acoustique,
- la figure 2 montre en vue de dessus, un navire avec des ensembles d'émission-réception acoustique disposés symétriquement de part et d'autre de la trajectoire du navire, qui constituent les deux bases de repérage,
- la figure 3 montre différents trajets mesurés entre les ensembles d'émission-réception de la base de repérage fixée au navire et la base de repérage mobile,
- la figure 4 montre différents trajets mesurés entre des objets remorqués et les ensembles d'émission-réception des deux bases de repérage,
- la figure 5 montre un schéma synoptique d'un ensemble de commande pour engendrer les impulsions acoustiques transmises,
- la figure 6 représente un schéma synoptique d'un système de réception et de télémesure qui détermine la position relative des différents objets remorqués par rapport à la base fixe et la base mobile,
- la figure 7 montre un schéma synoptique d'un ensemble de télémesure associé à chaque ensemble d'émission et de réception acoustique, et
- la figure 8 montre un schéma synoptique des ensembles de télémesure associés aux différents récepteurs d'une flûte sismique.

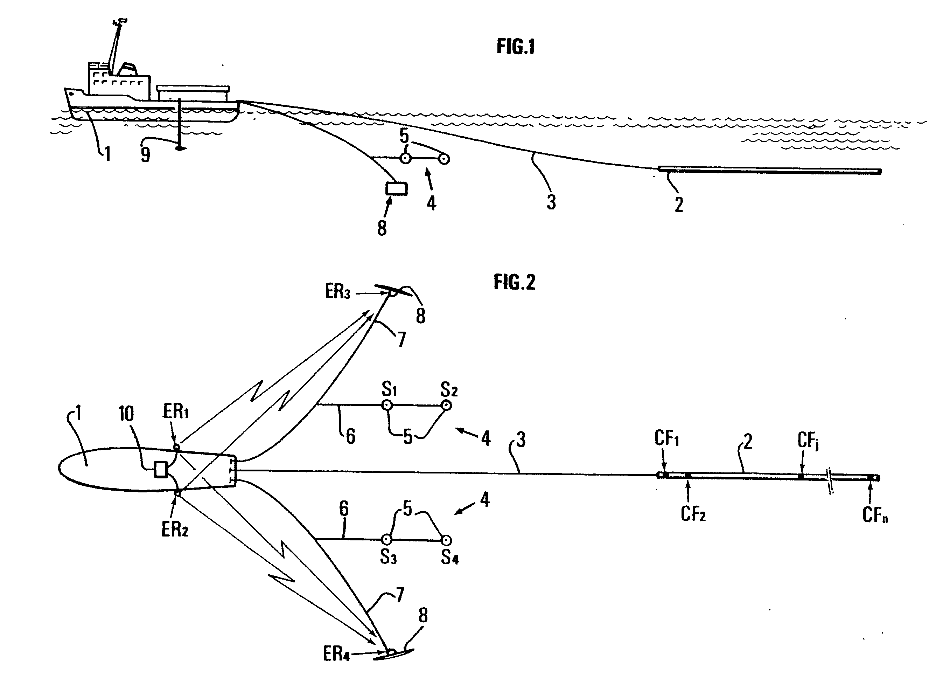

Le procédé selon l'invention peut servir par exemple à la détermination de la position par rapport à un navire 1 (Figs 1, 2) d'un système d'émission-réception sismique comportant une flûte sismique 2 remorquée à l'extrémité de câbles de traction 3 et un dispositif d'émission 4 constitué d'une ou plusieurs sources d'impulsions acoustiques 5 (S$_1$, S$_2$, S$_3$, S$_4$ etc).

Les sources 5 sont reliées au navire par des ensembles de câbles multi-fonctions ou "ombilics" 6. Ces câbles ou certains d'entre eux, sont fixés à d'autres câbles 7 reliant le navire à des appareils de déflexion 8 adaptés lorsqu'ils sont remorqués à s'écarter latéralement de la route suivie.

Il peut s'agir de paravanes, de panneaux ou de plateformes tels que ceux décrits dans les brevets français 2.296.562 ou 2.253.542. On utilise généralement deux appareils de déflexion adaptés à s'écarter symétriquement par rapport à la trajectoire du navire.

Le procédé selon l'invention comporte l'immersion en position fixe par rapport au navire de deux ensembles d'émission-réception acoustique ER1, ER2. Ces ensembles comportent chacun un transducteur émetteur-récepteur logé à la partie inférieure d'une longue tige immergeable 9 qui, en opération, est assujettie en position verticale à la coque du navire.

On utilise de préférence les tiges décrites dans la demande de brevet français EN. 86/09.321. Chaque transducteur est relié par les lignes courant le long des tiges 9 et sur le navire, à un dispositif d'émission-réception 10 (Fig. 2) qui sera décrit ultérieurement.

Aux deux appareils de déflexion 8 sont fixés respectivement deux ensembles d'émission-réception acoustiques ER3 et ER4. On peut utiliser par exemple des émetteurs-récepteurs autonomes du type "transpondeurs" adaptés, lors de la réception d'un signal acoustique, à réemettre un signal à une fréquence caractéristique.

On utilise de préférence un transducteur acoustique connecté à un émetteur-récepteur. Celui-ci est alimenté électriquement et relié au dispositif de commande 10 par un câble multiconducteurs attaché au câble de remorque 7 correspondant (et non représenté).

Les appareils et notamment les sources sismiques $S_1$, $S_2$ etc, dont il s'agit de déterminer la position par rapport au navire, sont pourvus de récepteurs acoustiques. Là encore et selon les cas, il peut s'agir de transducteurs associés à des circuits de réception et connectés par des lignes de transmission et d'alimentation au dispositif de commande ou bien des tranducteurs autonomes réémettant par voie acoustique en réponse aux signaux acoustiques qu'ils reçoivent. Pour des sources sismiques marines, on peut employer l'un ou l'autre cas.

Les lignes de transmission et d'alimentation, si on en utilise, sont incluses dans l'ensemble de connexion multi-fonctions 6 reliant chaque source sismique au navire.

Si l'on applique le procédé à la détermination de la position d'une flûte sismique, on peut employer des transpondeurs fixés extérieurement à celle-ci en un point ou une pluralité de points distincts.

On peut aussi intégrer des capteurs $CF_1$, $CF_2...CF_j...CF_n$ dans une flûte sismique, ces capteurs étant connectés au laboratoire d'enregistrement sur le navire soit par une ou plusieurs lignes spéciales, soit encore par l'intermédiaire d'appareils d'acquisition sismique intercalés entre différentes sections d'une flûte sismique dite à multiplexage telle que celle décrite dans le brevet français 2.511.772.

Le procédé selon l'invention comporte un premier cycle de télémesure acoustique pour la détermination de la base mobile constituée par les ensembles $ER_3$, $ER_4$. On commande successivement :

- la transmission par le premier ensemble d'émission-réception $ER_1$ fixé au navire d'une impulsion acoustique à une fréquence $f_1$, qui est reçue après propagation dans l'eau par le second ensemble $ER_2$ fixé au navire et par les ensembles d'émission-réception déportés $ER_3$, $ER_4$ de la base mobile remorquée, et

- la transmission par l'autre ensemble $ER_2$ d'une impulsion acoustique à une fréquence $f_2$ qui est reçue par le premier ensemble $ER_1$ et par les ensembles déportés $ER_3$, $ER_4$ de la base remorquée.

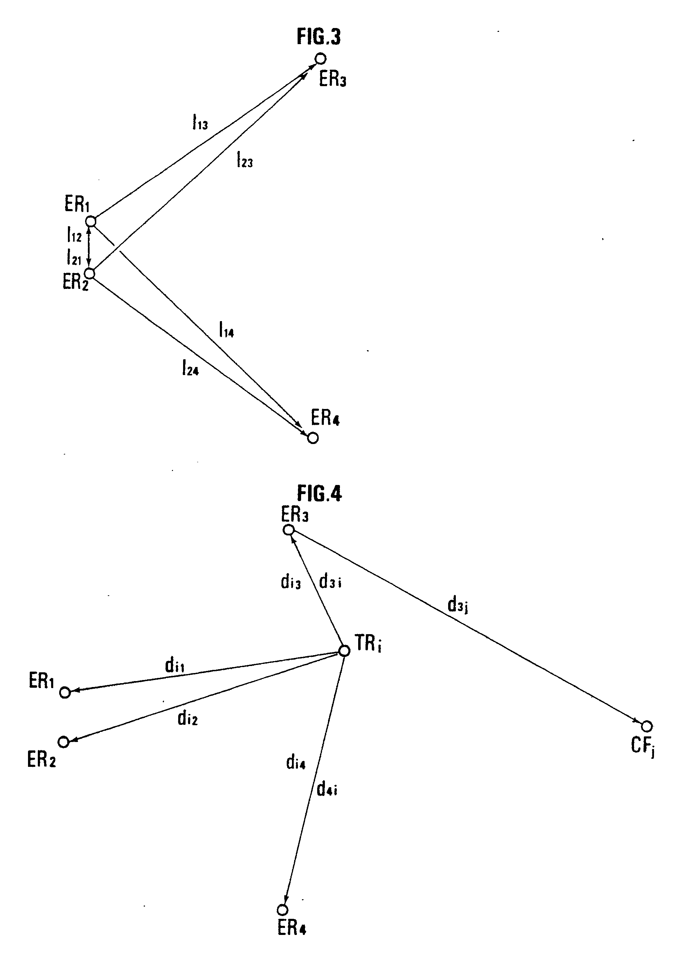

En combinant alors les résultats de ces deux séries de télémesures, on en déduit (Fig. 3) les distances $l_{12}$ et $l_{21}$ entre les deux premiers ensembles d'émission-réception $ER_1$ et $ER_2$ et les distances $l_{13}$, $l_{23}$, $l_{14}$ et $l_{24}$ séparant ceux-ci des ensembles $ER_3$, $ER_4$ déportés. Par ces premiers résultats, on vérifie l'écartement des deux ensembles fixes $ER_1$, $ER_2$ et l'on détermine les coordonnées de la base remorquée ($ER_3$, $ER_4$) liée aux moyens de déflexion.

On réalise ensuite un second cycle de télémesure acoustique pour positionner les objets remorqués par rapport à la base mobile ($ER_3$, $ER_4$). A cet effet, et dans le cas où des transpondeurs sont associés aux objets, on commande successivement :

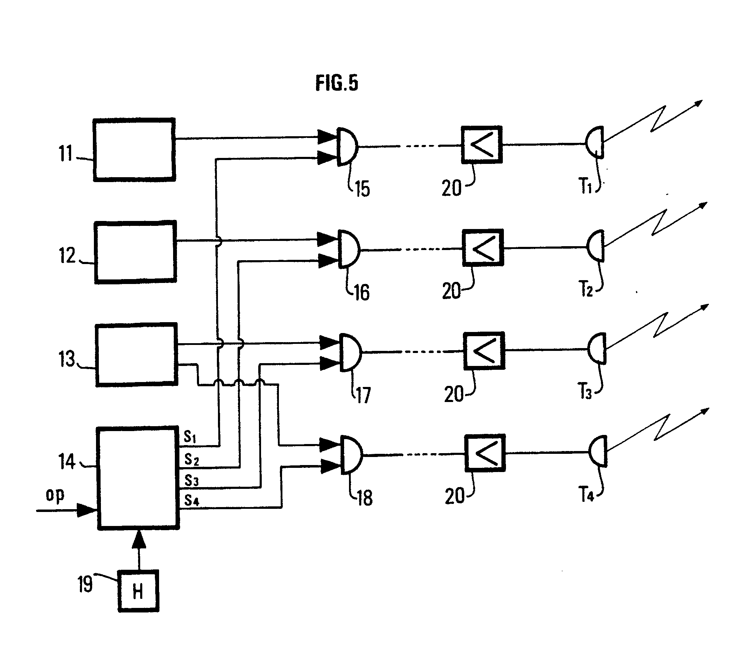

- la transmission par $ER_3$ d'une impulsion à fréquence $f_o$ (Fig. 4) qui est reçue par les transpondeurs $TR_i$ associés aux objets remorqués Si (dans le cas représenté à la figure 2, le nombre i est égal à 1, 2, 3 ou 4) et par les récepteurs spécialisés $CF_j$ de la flûte sismique (là aussi, le nombre j est par exemple égal à 1 ou 2). A la réception des impulsions, les transpondeurs réémettent chacun à leur fréquence propre $FR_i$ ($TR_1$, $TR_2$, $TR_3$, $TR_4$ répondent respectivement aux fréquences $FR_1$, $FR_2$, $FR_3$, $FR_4$). Les signaux réémis sont captés par les quatre ensembles d'émission-réception $ER_1$, $ER_2$, $ER_3$ et $ER_4$ et transmis au système central 10 sur le navire. De même les signaux captés par les récepteurs spécialisés $CF_j$ de la flûte sont transmis au même système central par les lignes de transmission à l'intérieur de la flûte sismique. Pour chaque transpondeur $TR_i$ on peut déterminer (Fig. 4) les distances de propagation $(d_{3,i} + d_{i,3})$, $(d_{3,i} + d_{i,1})$, $(d_{3,i} + d_{i,2})$ et $(d_{4,i} + d_{i,4})$. Aux récepteurs spécialisés $CF_j$, on peut associer également une distance

$d_{3,j}$.

- on répète la même opération à partir de $ER_4$ de manière à associer à chaque transpondeur $TR_i$ et à chaque récepteur $CF_j$ de la flûte, les mesures suivantes : $(d_{4,i} + d_{i,4})$, $(d_{4,i} + d_{i,1})$, $(d_{4,i} + d_{i,2})$ et $(d_{4,i} + d_{i,3})$ d'une part et $d_{4,j}$ d'autre part (Fig. 4).

Connaissant les trajets entre les ensembles d'émission-réception et les différents objets remorqués, on peut donc déterminer leurs coordonnées respectives par rapport au navire.

Le dispositif de mise en oeuvre comporte tout d'abord un ensemble de commande pour engendrer en séquence les différents signaux d'émission constitué (Fig. 5) de trois générateurs de signaux 11, 12, 13 produisant des signaux à des fréquences respectives $f_1$, $f_2$ et $f_0$, d'un séquenceur 14 et de quatre portes ET 15, 16, 17 et 18. Le séquenceur 14 comporte un compteur programmable connecté à un élément-horloge 19. Sur quatre sorties $s_1$, $s_2$, $s_3$, $s_4$ connectées aux entrées de commande des portes 15 à 18, le séquenceur délivre quatre impulsions décalées dans le temps.

Les portes 15 et 16 contrôlent respectivement l'application d'impulsions de fréquences $f_1$ et $f_2$ aux transducteurs $T_1$ et $T_2$ des ensembles d'émission-réception $ER_1$ et $ER_2$ par l'intermédiaire d'amplificateurs de puissance 20. De même, les portes 17 et 18 contrôlent respectivement l'application d'impulsions de fréquence $f_0$ successivement aux transducteurs $T_3$, $T_4$ des ensembles d'émission-réception $ER_3$ et $ER_4$ de la base remorquée par l'intermédiaire d'étages d'amplification 20.

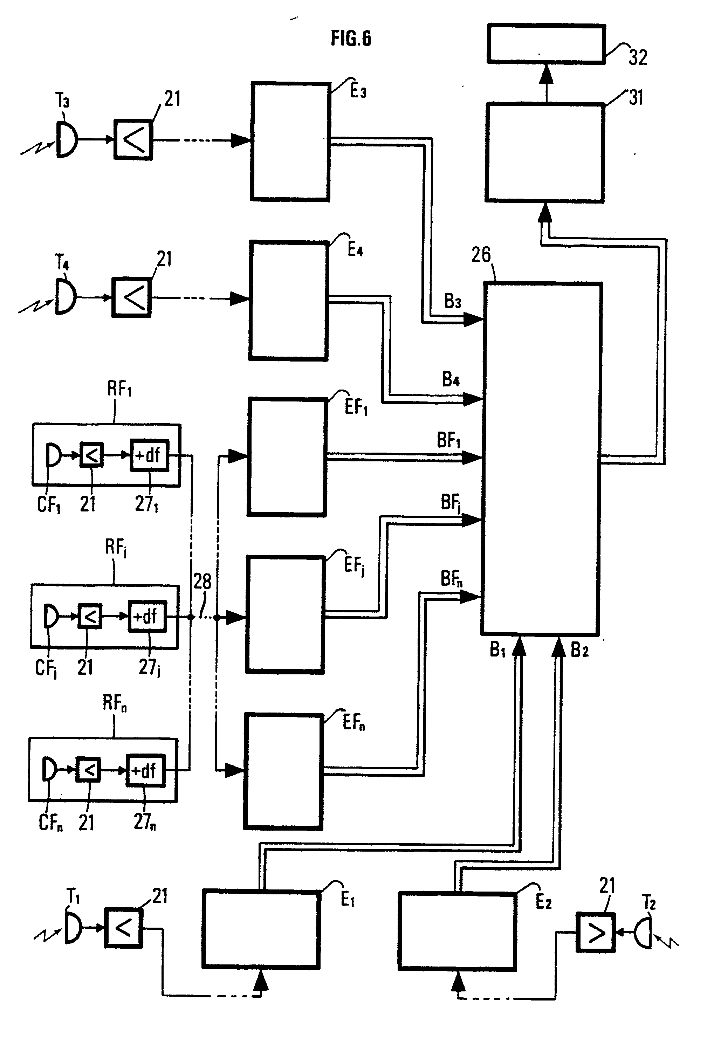

Le dispositif de mise en oeuvre comporte également un système de réception et de télémesure. Les signaux acoustiques reçus par les transducteurs $T_3$ et $T_4$ des ensembles d'émission-réception de la base remorquée ($ER_3$, $ER_4$) sont appliqués (Fig. 6) à des préamplificateurs 21 puis transmis respectivement à des ensembles de télémesure $E_3$, $E_4$.

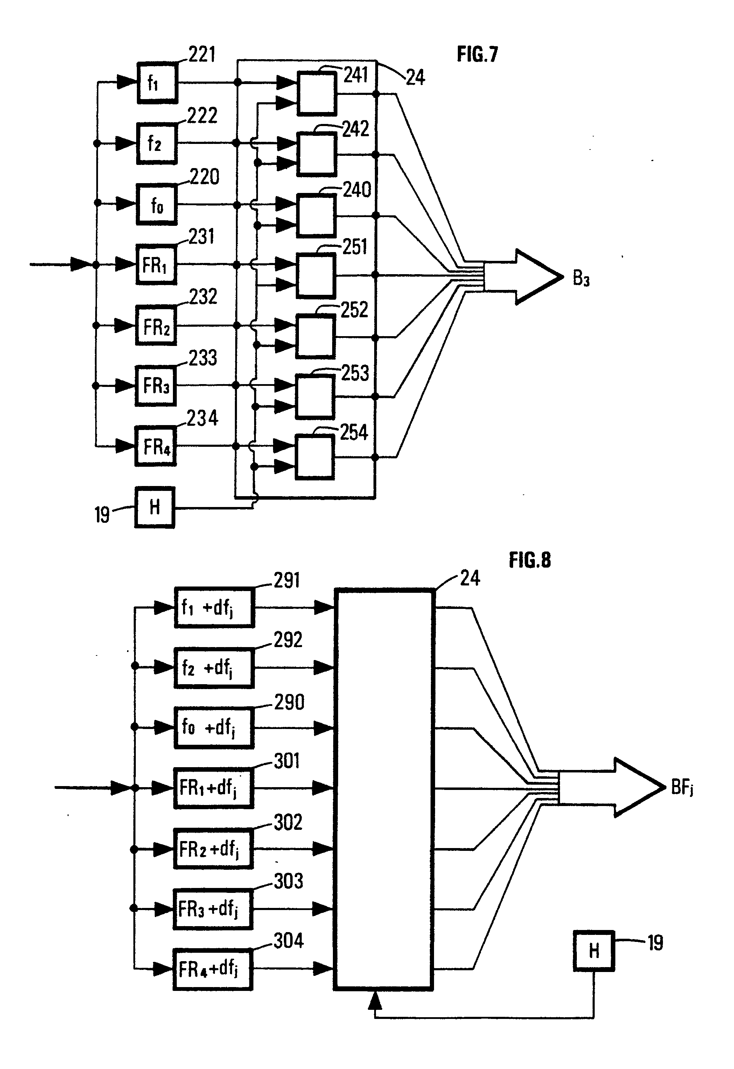

Chacun d'eux comporte (Fig. 7) trois filtres à bande passante étroite 220, 221, 222 pour séparer les signaux des ensembles d'émission-réception fixes $ER_1$, $ER_2$ et de l'autre ensemble ER de la base de repérage mobile ($ER_4$ quand $ER_3$ a émis et réciproquement). Il comporte aussi autant de filtres à bande étroite qu'il y a de transpondeurs $TR_i$ remorqués (quatres filtres 231, 232, 233, 234 dans l'exemple d'application décrit).

Ces filtres sont adaptés à séparer les signaux de fréquence $FR_1$, $FR_2$, $FR_3$, $FR_4$ provenant respectivement des transpondeurs $TR_1$, $TR_2$, $TR_3$, $TR_4$. Les signaux issus des filtres sont appliqués respectivement à des compteurs 240, 241, 242 d'une part et 251 à 254 d'autre part, d'un ensemble de comptage 24. Ces compteurs, qui sont connectés à l'élément-horloge (H) 19, mesurent les durées de propagation des signaux transmis aux différentes fréquences. Les valeurs mesurées issues des ensembles de comptage des ensembles $E_3$, $E_4$ (Fig. 6) sont appliquées respectivement à deux entrées $B_3$, $B_4$ d'un organe de mémorisation 26.

Les signaux acoustiques captés par les transducteurs de la flûte sismique $CF_1...CF_j...CF_n$, sont appliqués à des préamplificateurs 21 et ensuite à des éléments 271, 27j...27n pour décaler leurs fréquences respectives d'une quantité caractéristique de chaque transducteur.

L'élément 271 applique un décalage de fréquence $df_1$, l'élément 27j un décalage $df_j$, etc. Les sorties de tous les éléments décaleurs 271...27j...27n sont connectées à une ligne commune 28 courant le long de la flûte sismique et reliée au système de réception et de télémesure sur le navire.

La ligne 28 est connectée à autant d'ensembles de télémesure $EF_1...EF_j...EF_i$ qu'il y a de transducteurs $CF_1$, $CF_2...CF_j...CF_n$ répartis dans la flûte.

Chacun de ces ensembles $EF_1...EF_j...EF_n$ comporte (Fig. 8) autant de filtres à bande passante étroite que les ensembles $E_3$ et $E_4$ (en l'occurrence sept, 291, 292, 293 et 301 à 304). Mais leurs fréquences centrales respectives sont décalées d'une même quantité de manière à séparer des autres les signaux issus du transducteur correspondant (aux transducteurs $CF_1...CF_j...CF_n$ correspondent par exemple les décalages $df_1...df_j...df_n$) et à isoler de même les signaux acoustiques issus des différents émetteurs-récepteurs $ER_1$ à $ER_4$ et des différents transpondeurs $TR_i$. De la même manière, les signaux issus des filtres sont appliqués à un ensemble de comptage 24.

Les valeurs mesurées issues des compteurs des ensembles $EF_1...EF_j...EF_n$ sont appliquées respectivement à des entrées $BF_1...BF_j...BF_n$ de l'organe de mémorisation 26 (Fig 6).

Celui-ci est connecté à un calculateur 31 qui détermine, d'après les différentes valeurs mémorisées au cours des deux cycles de télémesure acoustique, la position des ensembles émetteurs-récepteurs $ER_3$, $ER_4$ de la base mobile par rapport au navire, la position des objets remorqués par rapport à la base mobile et donc leur position par rapport au navire. Les résultats des calculs sont alors affichés sur une console de visualisation 32.

Le système de réception et de télémesure comporte également deux ensembles de télémesure $E_1$, $E_2$... connectés respectivement aux transducteurs $T_1n$ $T_2$ de la base de repérage fixe $ER_1$, $ER_2$) par l'intermédiaire également de préamplificateurs 21. Les ensembles $E_1$ et $E_2$ sont analogues aux ensembles $E_3$ et $E_4$ précédemment décrits et

les valeurs mesurées par leurs ensembles de comptage respectifs sont appliqués à deux entrées $B_1$, $B_2$ de l'organe de mémorisation 26.

**Revendications**

1. Procédé de détermination de la position d'objets immergés associés à des moyens de réception d'ondes acoustiques et remorqués en immersion par un navire, relativement à un ensemble de repérage relie au navire, qui comporte l'utilisation d'une base de repérage mobile comprenant deux ensembles d'émission-réception d'ondes acoustiques ($ER_3$, $ER_4$) remorqués en immersion et déportés latéralement de part et d'autre de la trajectoire du navire, par la mesure du temps de propagation de ces ondes sur des trajets entre l'ensemble de repérage et lesdits objets, caractérisé en ce que :
   - le procédé comporte en outre l'utilisation d'une base de repérage fixée au navire et pourvue d'au moins deux ensembles d'émission-réception d'ondes acoustiques ($ER_1$, $ER_2$), et en ce que l'on réalise
   - un premier cycle de télémesure acoustique de la position de la base de repérage mobile ($ER_3$, $ER_4$) relativement à la base de repérage ($ER_1$, $ER_2$) fixée au navire,
   - au moins un second cycle de télémesure acoustique de la position des moyens de réception (TR, CF) associés aux objets remorqués relativement à la base de repérage mobile, et en ce que
   - l'on détermine la position des objets remorqués relativement au navire.

2. Dispositif pour la mise en oeuvre du procédé selon la revendication 1, comportant des récepteurs acoustiques reliés auxdits objets (2,5), une base de repérage mobile comprenant deux ensembles d'émission-réception d'ondes acoustiques ($ER_3$, $ER_4$) associés à des moyens (8) remorqués par le navire permettant de les écarter latéralement de part et d'autre de la trajectoire du navire, caractérisé en ce qu'il comporte une base de repérage fixée au navire, constituée d'ensembles d'émission-réception d'ondes acoustiques ($ER_1$, $ER_2$) distants les uns des autres, un ensemble de commande relié aux ensembles d'émission-réception, pour engendrer des signaux impulsionnels à deux fréquences différentes ($f_1$, $f_2$), et les appliquer aux ensembles d'émission-réception de la base de repérage fixe, et pour engendrer des signaux impulsionnels à une troisième fréquence ($f_0$) et les appliquer à chaque ensemble d'émission-réception de la base de repérage mobile, ainsi qu'un système de réception et de télémesure connecté aux ensembles d'émission-réception et à chaque récepteur acoustique, pour déterminer les positions respectives de chaque ensemble d'émission-réception de la base de repérage mobile par rapport aux ensembles de la base de repérage fixée au navire et la position de chaque récepteur par rapport aux ensembles d'émission-réception de la base de repérage mobile.

3. Dispositif selon la revendication 2, caractérisé en ce que chaque récepteur acoustique est associé à un transpondeur (TR) à fréquence de réémission fixe déterminée.

4. Dispositif selon la revendication 2, caractérisé en ce que les moyens remorqués (8) pour écarter chaque ensemble d'émission-réception comportent un panneau immergeable relié au navire par des moyens de traction et au moins un câble pour l'alimentation électrique de l'ensemble d'émission-réception associé et pour la transmission de signaux entre celui-ci, l'ensemble de commande et le système de réception et de télémesure.

5. Dispositif selon la revendication 3, caractérisé en ce que l'ensemble de commande comporte des générateurs (11, 12) de signaux de fréquences différentes ($f_1$, $f_2$) dont les sorties sont connectées respectivement aux ensembles d'émission-réception ($ER_1$, $ER_2$) de la base de repérage fixée au navire par l'intermédiaire de portes (15,16) et un générateur (13) de signaux à une troisième fréquence ($f_0$) dont la sortie est connectée aux ensembles d'émission-réception ($ER_3$, $ER_4$) de la base de repérage mobile par l'intermédiaire d'autres portes (17, 18) et des moyens de comptage programmables (14) connectés à un élément-horloge (19) pour engendrer des signaux impulsionnels et les appliquer aux entrées de commande des portes (15-18).

6. Dispositif selon la revendication 3, caractérisé en ce que le système de réception et de télémesure comporte une pluralité d'ensembles de télémesure ($E_1$-$EF_n$) comprenant chacun une pluralité de moyens de filtrage (22, 23) pour séparer les signaux reçus par les ensembles d'émission-réception en fonction de leurs fréquences respectives et des éléments de comptage (24, 25) pour mesurer les durées de propagation desdits signaux, le système de réception et de télémesure comportant également un organe de mémorisation (26) des valeurs mesurées et des moyens de calcul (31) pour la détermination de la position relative des objets remorqués par rapport aux ensembles d'émission-réception (ER$_1$-ER$_4$) des deux bases de repérage.

7. Dispositif selon la revendication 6, caractérisé en ce que chaque récepteur acoustique fixé à chaque objet remorqué (5) est associé à un transpondeur (TR) réémettant sur une fréquence particulière (FR$_1$ -FR$_4$), chaque ensemble de télémesure comportant des moyens de filtrage (22, 23) adaptés aux fréquences particulières de réémission des transpondeurs.

8. Dispositif selon la revendication 6 ou 7, caractérisé en ce que l'un des objets remorqués est une flûte sismique (2) comportant au moins un récepteur acoustique (CF$_j$) relié par une ligne de transmission (28) à un ensemble de télémesure (EF$_j$) comprenant une pluralité de moyens de filtrage et des moyens de comptage pour mesurer les durées de propagation des signaux transmis depuis les différents ensembles d'émission-réception (ER$_1$ - ER$_4$).

9. Dispositif selon la revendication 8, caractérisé en ce que l'ensemble de télémesure (EF$_j$) relié à chaque récepteur acoustique (CF$_j$) de la flûte (2), comporte des moyens de filtrage (29, 30) adaptés à séparer les signaux acoustiques émanant des différents transpondeurs.

10. Dispositif selon la revendication 8, caractérisé en ce que la flûte sismique comporte une pluralité de récepteurs acoustiques (CF$_1$ - CF$_n$) connectés en parallèle sur la ligne de transmission (28), chacun d'eux comportant un moyen (27$_1$ - 27$_n$) pour décaler la fréquence des signaux qu'il recoit d'une quantité caractéristique (df$_1$ - df$_n$), et en ce que le système de réception et de télémesure comporte une pluralité d'ensembles de télémesure (EF$_1$ - EF$_n$) associés respectivement aux différents récepteurs acoustiques (CF$_1$ - CF$_n$) de la flûte, chacun d'eux comportant des filtres dont les fréquences sont décalées de la même quantité caractéristique, de manière à séparer les signaux acoustiques émanant des différents ensembles d'émission-réception (ER$_1$ - ER$_4$) et des transpondeurs (TR$_i$) associés aux objets remorqués.

## Claims

1. Method for determining the position of submerged objects associated with a means of receiving acoustic waves and towed, when submerged, by a vessel relative to a locator unit connected to the vessel, this comprising the use of a mobile locator base comprising two acoustic wave send-receive units (ER$_3$, ER$_4$) towed, when submerged, and positioned laterally on each side of the vessel trajectory, by measuring the propagation time for these waves over paths between the locator unit and the said objects, characterised in that :
   - the method also comprises the use of a locator base fixed to the vessel and provided with at least two acoustic wave send-receive units (ER$_1$, ER$_2$) and in that the following is carried out :
   - a first acoustic telemetry cycle to determine the position of the mobile locator base (ER$_3$, ER$_4$) relative to the locator base (ER$_1$, ER$_2$) fixed to the vessel
   - at least one second acoustic telemetry cycle to determine the position of the means of reception (TR, CF) associated with the objects being towed, relative to the mobile locator base, and in that
   - the position of the objects being towed is determined relative to the vessel.

2. Device for the application of the method in accordance with claim 1, comprising acoustic receivers connected to the said objects (2, 5), a mobile locator base comprising two acoustic wave send-receive units (ER$_3$, ER$_4$) associated with devices (8) towed by the vessel and permitting these to be spaced laterally on each side of the vessel trajectory, characterised in that it comprises a locator base fixed to the vessel and constituting acoustic wave send-receive units (ER$_1$, ER$_2$) spaced apart from each other, a control unit connected to the send-receive units in order to generate signal pulses at two different frequencies (f$_1$, f$_2$) and apply these to the send-receive units forming part of the fixed locator base and to generate signal pulses at a third frequency (f$_0$) and apply these to each send-receive unit forming part of the mobile locator base, together with a reception and telemetry system connected to the send-receive units and to each acoustic receiver, in order to determine the respective positions of each send-receive unit forming part of the mobile locator base relative to the units forming part of the locator base fixed to the vessel and the position of each receiver relative to the send-receive units forming part of the mobile locator base.

3. Device in accordance with claim 2, characterised in that each acoustic receiver is associated with a transponder (TR) at a determined fixed retransmission frequency.

4. Device in accordance with claim 2, characterised in that the towed devices (8) used to separate each send-receive unit comprise a panel capable of being submerged and connected to the vessel by a means of towing and at least one cable for the supply of electrical power to the associated send-receive unit and for the transmission of signals between this unit, the control unit and the reception and telemetry system.

5. Device in accordance with claim 3, characterised in that the control unit comprises generators (11, 12) which provide signals of different frequencies ($f_1$, $f_2$), the outputs being connected respectively to the send-receive units ($ER_1$, $ER_2$) for the locator base fixed to the vessel, by means of gates (15, 16) and a generator (13) of signals at a third frequency ($f_0$), the output being connected to the send-receive units ($ER_3$, $ER_4$) for the mobile locator base, by means of other gates (17, 18) and a programmable means of computation (14) connected to a clock unit (19) in order to generate signal pulses and apply these to the control inputs for the gates (15-18).

6. Device in accordance with claim 3, characterised in that the reception and telemetry system comprises a number of telemetry units ($E_1$, - $EF_n$), each comprising a number of filter units (22, 23) to separate the signals received by the send-receive units in accordance with their respective frequencies and the computation units (24, 25) in order to measure the propagation times of the said signals, the reception and telemetry system also comprising a data storage device (26) for the values measured and a means of calculation (31) for determination of the relative position of the objects being towed relative to the send-receive units ($ER_1$ - $ER_4$) for the two locator bases.

7. Device in accordance with claim 6, characterised in that each acoustic receiver fixed to each object being towed (5) is associated with a transponder (TR) which retransmits over a particular frequency ($FR_1$ -$FR_4$), each telemetry unit comprising a filter unit (22, 23) adapted to the particular retransmission frequencies of the transponders.

8. Device in accordance with claim 6 or 7, characterised in that one of the objects being towed is a seismic boom (2) which includes at least one acoustic receiver ($CF_j$) connected by a transmission line (28) to a telemetry unit ($EF_j$) comprising a number of filter units and a means of computation in order to measure the propagation times of the signals transmitted from the different send-receive units ($ER_1$ - $ER_4$).

9. Device in accordance with claim 8, characterised in that the telemetry unit ($EF_j$), connected to each acoustic receiver ($CF_j$) for the boom (2) includes filter units (29, 30) designed to separate the acoustic signals transmitted by the different transponders.

10. Device in accordance with claim 8, characterised in that the seismic boom comprises a number of acoustic receivers ($CF_1$ - $CF_n$) connected in parallel to the transmission line (28), each comprising a means (271 - 27 n) to offset the frequency of the signals received, by a characteristic quantity ($df_1$ -$df_n$) and in that the reception and telemetry system comprises a number of telemetry units ($EF_1$ - $EF_n$) associated respectively with the different acoustic receivers ($CF_1$ - $CF_n$) for the boom, each including filters, the frequencies being offset by the same characteristic quantity, in order to separate the acoustic signals transmitted by the different send-receive units ($ER_1$ - $ER_4$) and the transponders ($TR_j$) associated with the objects being towed.

**Patentansprüche**

1. Verfahren zur Bestimmung der Position von unter Wasser befindlichen Objekten, die Mitteln zum Empfang akustischer Wellen zugeordnet und im Tauchzustand durch ein Schiff geschleppt sind bezüglich einer mit einem Schiff verbundenen Ortungsanordnung, das die Verwendung einer beweglichen Ortungsbasis mit zwei Sende-Empfangsanordnungen für akustische Wellen ($ER_3$, $ER_4$) umfaßt, die im Tauchzustand und seitlich versetzt zu beiden Seiten der Bewegungsbahn des Schiffes durch Messen der Fortpflanzungszeit dieser Wellen auf Bahnen zwischen der Ortungsanordnung und diesen Gegenständen geschleppt sind, dadurch gekennzeichnet, daß:
   - das Verfahren im übrigen die Verwendung einer am Schiff befestigten Ortungsbasis, die mit wenigstens zwei Sende-Empfangsanordnungen für akustische Wellen ($ER_1$, $ER_2$) verbunden ist, umfaßt, und daß man durchführt
   - einen ersten akustischen Fernmeßzyklus für die Position der beweglichen Or-

tungsbasis (ER$_3$, ER$_4$) relativ zur am Schiff befestigten Ortungsbasis (ER$_1$, ER$_2$),

- wenigstens einen Zweiten akustischen Fernmeßzyklus für die Position der Empfangsmittel (TR, CF) in Zuordnung zu den geschleppten Gegenständen relativ zur beweglichen Ortungsbasis, und daß man
- die Position der geschleppten Gegenstände relativ zum Schiff bestimmt.

2. Gerät zur Durchführung des Verfahrens gemäß Anspruch 1 mit akustischen mit diesen Gegenständen (2, 5) verbundenen Empfängern, einer beweglichen Ortungsbasis mit zwei Sende-Empfangsanordnungen für akustische Wellen (ER$_3$, ER$_4$) in Zuordnung zu vom Schiff geschleppten Mitteln (8), die es erlauben, sie seitlich zu beiden Seiten der Bewegungsbahn des Schiffes auf Abstand zu bringen, dadurch gekennzeichnet, daß es eine am Schiff befestigte Ortungsbasis, bestehend aus Sende-Empfangsanordnungen für akustische Wellen (ER$_1$, ER$_2$), die fern voneinander sich befinden, eine Steueranordnung, die mit den Sende-Empfangsanordnungen verbunden ist, um Impulssignale bei zwei unterschiedlichen Frequenzen (f$_1$, f$_2$) zu erzeugen umfaßt und um sie an Sende-Empfangsanordnungen der festen Ortungsbasis zu legen und um Impulssignale bei einer dritten Frequenz (f$_0$) zu erzeugen und sie an jede Sende-Empfangsanordnung der beweglichen Ortungsbasis anzulegen, sowie ein Empfangs- und Fernmeßsystem, das mit Sende-Empfangsanordnungen und mit jedem akustischen Empfänger verbunden ist, um die jeweiligen Positionen jeder Sende-Empfangsanordnung für die bewegliche Ortungsbasis, bezogen auf die Anordnungen der am Schiff festen Ortungsbasis sowie die Position jedes Empfängers bezogen auf Sende-Empfangsanordnungen der beweglichen Ortungsbasis zu bestimmen.

3. Gerät nach Anspruch 2, dadurch gekennzeichnet, daß jeder akustische Empfänger einem Transponder (TR) mit bestimmter fester Reemissionsfrequenz bzw. Relaisübertragungsfrequenz zugeordnet ist.

4. Gerät nach Anspruch 2, dadurch gekennzeichnet, daß die geschleppten Mittel (8), um jede Sende-Empfangsanordnung auf Abstand zu halten, eine tauchbare, mit dem Schiff über Zugmittel und wenigstens ein Kabel verbundene Platte umfassen, wobei das Kabel für die elektrische Versorgung der zugeordneten Sende-Empfangsanordnung und zur Übertragung von Signalen zwischen dieser, der Steueranordnung und dem Empfangs- und Fernmeßsystem bestimmt ist.

5. Gerät nach Anspruch 3, dadurch gekennzeichnet, daß die Steueranordnung Signalerzeuger (11, 12) unterschiedlicher Frequenz (f$_1$, f$_2$), deren Ausgänge jeweils mit den Sende-Empfangsanordnungen (ER$_1$, ER$_2$) der am Schiff befestigten Ortungsbasis vermittels Gattern (15, 16) verbunden sind, einen Signalgenerator (13) für eine dritte Frequenz (f$_0$), dessen Ausgang mit den Sende-Empfangsanordnungen (ER$_3$, ER$_4$) der beweglichen Ortungsbasis vermittels anderer Gatter (17, 18) sowie programmierbare Zählmittel (14) umfaßt, die mit einem Taktgeberelement (19) verbunden sind, um Impulssignale zu erzeugen und sie an die Steuereingänge der Gatter (15-18) zu legen.

6. Gerät nach Anspruch 3, dadurch gekennzeichnet, daß das Empfangs- und Fernmeßsystem eine Vielzahl von Fernmeßanordnungen (E$_1$-EF$_n$) mit einer Vielzahl von Filtermitteln (22, 23) umfaßt, um die durch die Sende-Empfangsanordnungen als Funktion ihrer jeweiligen Frequenzen empfangenen Signale zu trennen sowie Zählelemente (24, 25), um die Fortpflanzungsdauer dieser Signale zu messen, wobei das Empfangs- und Fernmeßsystem ebenfalls ein Speicherorgan (26) der gemessenen Werte und Rechnermittel (31) zur Bestimmung der Relativposition der geschleppten Objekte, bezogen auf die Sende-Empfangsanordnungen (ER$_1$-ER$_4$) der beiden Ortungsbasen umfaßt.

7. Gerät nach Anspruch 6, dadurch gekennzeichnet, daß jeder akustische an jedem geschleppten Objekt (5) befestigte Empfänger einem Transponder (TR) zugeordnet ist, der auf einer besonderen Frequenz (FR$_1$-FR$_4$) wieder ausstrahlt, wobei jede Fernmeßanordnung Filtriermittel (22, 23) umfaßt, die für besondere Reemissionsfrequenzen der Transponder ausgelegt sind.

8. Gerät nach Anspruch 6 oder 7, dadurch gekennzeichnet, daß eines der geschleppten Gegenstände eine sogenannte seismische Flöte (2) mit wenigstens einem akustischen Empfänger (CF$_j$) ist, der über eine Übertragungsleitung (28) mit einer Fernmeßanordnung (EF$_j$) mit einer Vielzahl von Filtermitteln und zählmitteln zum Messen der Fortpflanzungsdauer der von den verschiedenen Sende-Empfangsanordnungen (ER$_1$-ER$_4$) übertragenen Signale verbunden ist.

**9.** Gerät nach Anspruch 8, dadurch gekennzeichnet, daß die mit jedem akustischen Empfänger (CF$_j$) der seismischen Flöte (2) verbundene Fernmeßanordnung (EF$_j$) Filtriermittel (29, 30) derartiger Ausbildung umfaßt, daß die aus den verschiedenen Transpondern stammenden akustischen Signale getrennt werden.

**10.** Gerät nach Anspruch 8, dadurch gekennzeichnet, daß die seismische Flöte eine Vielzahl akustischer Empfänger (CF$_1$-CF$_n$) umfaßt, die parallel mit der Übertragungsleitung (28) verbunden sind, von denen jeder ein Mittel (27$_1$1-27n) umfaßt, um die Frequenz der empfangenen Signale um eine charakteristische Größe (df$_1$-df$_n$) zu verschieben, und daß das Empfangs- und Fernmeßsystem eine Vielzahl von Fernmeßanordnungen (EF$_1$-EF$_n$) jeweils in Zuordnung zu den verschiedenen akustischen Empfängern (CF$_1$-CF$_n$) der Flöte umfaßt, von denen jede Filter aufweist, deren Frequenzen um die gleiche charakteristische Größe derart verschoben sind, daß die akustischen, aus den verschiedenen Sende-Empfangsanordnungen (ER$_1$-ER$_4$) und den den geschleppten Gegenständen zugeordneten Transpondern (TR$_j$) stammenden Signale getrennt werden.

**FIG.1**

**FIG.2**

EP 0 267 840 B1

**FIG.3**

**FIG.4**

**FIG.5**

**FIG.6**

**FIG.7**

**FIG.8**